# EUROPÄISCHE PATENTSCHRIFT

(11) **EP 2 304 186 B1**
(45) Veröffentlichungstag und Bekanntmachung des Hinweises auf die Patenterteilung: **13.11.2019**
(21) Anmeldenummer: 09797467.9
(22) Anmeldetag: 08.07.2009
(51) Int. Cl.: F01D 5/20, F01D 5/14, F01D 11/08

(54) **AXIALTURBOMASCHINE MIT GERINGEN SPALTVERLUSTEN**
AXIAL TURBOMACHINE WITH LOW TIP LEAKAGE LOSSES
TURBOMACHINE AXIALE À FAIBLES PERTES DU JEU DES EXTRÉMITÉS D'AUBES

(30) Priorität: 17.07.2008 EP 08012959
(43) Veröffentlichungstag der Anmeldung: 06.04.2011
(73) Patentinhaber: Siemens Aktiengesellschaft, 80333 München (DE); Deutsches Zentrum für Luft- und Raumfahrt e.V., 51147 Köln (DE)
(72) Erfinder: KRÖGER, Georg, 50823 Köln (DE); CORNELIUS, Christian, 45549 Sprockhövel (DE); AULICH, Marcel, 50674 Köln (DE)
(86) Internationale Anmeldenummer: PCT/EP2009/058681
(87) Internationale Veröffentlichungsnummer: WO 2010/006975

(56) Entgegenhaltungen:
- EP-A- 0 292 250
- EP-A- 0 675 290
- EP-A- 1 531 233
- FR-A- 996 967
- US-A- 4 738 586
- US-A- 5 275 531
- US-A- 5 639 095

## Beschreibung

Die Erfindung betrifft eine Axialturbomaschine, die geringe Spaltverluste hat.

Eine Axialturbomaschine weist ein Gehäuse und einen Rotor auf, der von dem Gehäuse umgeben ist. Der Rotor weist eine Nabenkontur auf, die zusammen mit der Innenkontur des Gehäuses einen Strömungskanal durch die Axialturbomaschine bildet. Der Rotor weist eine Mehrzahl von Rotorstufen auf, die jeweils von einem Laufschaufelgitter gebildet sind. Die Laufschaufelgitter weisen eine Mehrzahl von Laufschaufeln auf, die jeweils mit ihrem einen Ende nabenseitig an dem Rotor befestigt sind und mit ihrem anderen Ende radial nach außen zeigen. An diesem anderen Ende der Laufschaufel ist eine Schaufelspitze ausgebildet, die der Innenseite des Gehäuses zugewandt und unmittelbar benachbart angeordnet ist. Der Abstand zwischen jeder Schaufelspitze und der Innenseite des Gehäuses ist als ein Radialspalt ausgebildet, der derart dimensioniert ist, dass einerseits die Schaufelspitzen beim Betrieb der Axialturbomaschine an das Gehäuse nicht anstreifen und andererseits die beim Betrieb der Axialturbomaschine sich einstellende Leckageströmung durch den Radialspalt möglichst gering ist. Damit die Axialturbomaschine einen hohen Wirkungsgrad hat, ist es wünschenswert, dass die Leckageströmung durch den Radialspalt möglichst gering ist.

Ist die Axialturbomaschine in einem Flugtriebwerk eingebaut, ist das Gehäuse filigran konstruiert, um ein möglicht geringes Gewicht zu haben. Dagegen ist der Rotor massiv konstruiert, um den Druck- und Temperaturbeanspruchungen beim Betrieb der Axialturbomaschine standhalten zu können. Die Laufschaufeln sind im Vergleich zu dem Rotor weniger massiv ausgeführt und sind an den Rotor montiert.

Beim Betrieb der Axialturbomaschine stehen die Innenseite des Gehäuses und die Laufschaufeln mit heißem Gas in Kontakt, wobei das Gehäuse an seiner Innenseite einen großflächigen Kontakt mit dem heißen Gas hat. Dadurch, dass das Gehäuse filigraner als der Rotor ausgebildet ist, erwärmt sich der Rotor langsamer als das Gehäuse. Dies hat zur Folge, dass zum An- und Abfahren der Axialturbomaschine der Rotor und das Gehäuse unterschiedliche Wärmeausdehnungsgeschwindigkeiten haben, so dass sich beim An- und Abfahren der Axialturbomaschine die Höhe des Radialspalts, der zwischen den Schaufelspitzen der Laufschaufeln und der Innenseite des Gehäuses ausgebildet ist, ändert. Dabei stellt sich beim Anfahren der Radialspalt als groß und beim Abfahren als klein ein. Damit beim Abfahren die Schaufelspitzen der Laufschaufeln nicht an das Gehäuse anstreifen und beschädigt werden, ist der Radialspalt mit einer derart dimensionierten Minimalhöhe versehen, dass beim Abfahren der Axialturbomaschine die Schaufelspitzen das Gehäuse so gut wie nie berühren. Dies hat zur Folge, dass an den Schaufelspitzen ein entsprechend dimensionierter Radialspalt vorgehalten ist. Andererseits soll insbesondere beim Anfahren der Axialturbomaschine der Radialspalt nur so groß ausgebildet sein, dass eine Reduktion der Leistungsdichte und des Wirkungsgrads der Axialturbomaschine hervorgerufen durch die Leckageströmung sich in hinnehmbaren Grenzen hält.

Moderne Laufschaufeln haben eine sehr hohe aerodynamische Effizienz, die durch eine hohe Druckbelastung der Laufschaufeln erreicht ist. Hervorgerufen durch diese hohe Druckbelastung ist die Leckageströmung durch den Radialspalt besonders stark ausgebildet, so dass durch die Leckageströmung der Gesamtwirkungsgrad der Laufschaufel stark beeinträchtigt ist. Insbesondere bei Laufschaufeln mit kleiner Bauhöhe und großen Radialspalten wird etwa 50 % des Gesamtverlusts der Laufschaufeln durch die Leckageströmung verursacht. Eine Reduktion der Leckageströmung bewirkt eine Verbesserung des Gesamtwirkungsgrads der Laufschaufel.

Herkömmlich ist bekannt, die Leckageströmung beispielsweise durch eine "active-clearance-control"-Einrichtung zu verringern. Bei der "active-clearance-control"-Einrichtung wird das Gehäuse beim Anfahren gekühlt und beim Abfahren erwärmt, so dass die Wärmeausdehnungsgeschwindigkeit des Gehäuses an die der Laufschaufeln angeglichen ist. Ferner ist zur Reduktion der Leckageströmung eine besondere Formgebung der Schaufelspitzen, wie beispielsweise das Ausbilden einer klingenförmigen Schaufelspitze, aus der US 4,738,586 bekannt.

Eine weitere in Richtung der Spannweite der Laufschaufel konturierte Schaufelspitze ist aus der EP 675 290 A2 bekannt. Die Schaufelspitze und die gegenüberliegende Kanalwand sind zueinander korrespondierend konturiert, wobei die Kanalwand eine umlaufende Vertiefung und die Schaufelspitze eine zur Vertiefung passende radiale Spitzenverlängerung aufweisen. Durch diese Maßnahme kann eine schnelle Reduzierung der Gasgeschwindigkeit im Bereich der Vertiefung erreicht werden, wodurch die Stärke von Schockwellen geschwächt wird.

Eine weitere Schaufelspitzenkonturierung und Kanalwandkonturierung geht aus der FR 996967 hervor.

Aufgabe der Erfindung ist es, eine Axialturbomaschine zu schaffen, die einen hohen aerodynamischen Wirkungsgrad hat. Weitere Aufgabe der Erfindung ist die Bereitstellung einer Laufschaufel dazu.

Die erfindungsgemäße Axialturbomaschine weist ein Laufschaufelgitter gemäß den Merkmalen des Anspruchs 1 auf.

Die Profilierung der Laufschaufel der erfindungsgemäßen Axialturbomaschine kann herkömmlicher Art sein. Die Radialerhebungen der Laufschaufel verlaufen parallel zu der Radialvertiefung der Ringrauminnenseite in Hauptdurchströmungsrichtung der Axialturbomaschine, so dass der Radialspalt einen gleichmäßigen und wellenartigen Verlauf hat. Die nach Art einer Doppelwelle ausgebildete Ringrauminneseite und Schaufelblattspitze - und dementsprechend auch der Radialspalt - umfassen jeweils zumindest vier durch Wendepunkte abgegrenzte Krümmungsabschnitte, wobei die Krümmungen benachbarten Krümmungsabschnitte unterschiedliche Vorzeichen aufweisen. Dadurch wird die Leckageströmung, die sich im Betrieb der Axialturbomaschine durch den Radialspalt einstellt, wechselweise beschleunigt und verzögert.
Durch die Beschleunigung und Verzögerung wird die Überströmgeschwindigkeit und die Richtung der Leckageströmung so verändert, dass ein Spaltwirbel, der beim Vermischen der Leckageströmung mit der Hauptströmung sich ausbildet, in der Entstehungsphase und im Wachstum gehindert ist. Dadurch wird vorteilhaft erreicht, dass die Strömung durch das Laufschaufelgitter homogen und verlustarm ist, wodurch der Wirkungsgrad des Laufschaufelgitters und somit der Axialturbomaschine hoch ist.

Der in seinem Spaltmaß konstante Spalt hat entlang der Hauptströmungsrichtung einen gleichmäßigen, sich nicht abrupt ändernden Verlauf, so dass die Strömung im Bereich der Schaufelspitze verlustarm ist.

Ferner sind die Krümmungsabschnitte derart geformt, dass in Hauptdurchströmungsrichtung der Axialturbomaschine der Verlauf des Radialspalts im Wesentlichen kantenfrei und stufenfrei verläuft. Dabei können auch mehr als vier Krümmungsabschnitte, sowohl in der Ringrauminnenseite als auch an Schaufelblattspitze, vorgesehen sein, um die Leckageströmung über den Radialspalt zu vermindern.

Hervorgerufen durch den verminderten Einfluss der Leckageströmung auf die Hauptströmung ist zusätzlich die Arbeitsumsetzung der Laufschaufel hoch und die Anströmung einer stromab der Laufschaufel liegenden Leitschaufel verbessert. Dadurch ist eine Fehlanströmung dieser Leitschaufel reduziert und/oder die Leitschaufel kann eine einfachere Form haben.

Vorteilhaft ist der Massenstrom der Leckageströmung und deren ungünstige Auswirkung auf den Gesamtwirkungsgrad des Laufschaufelgitters reduziert. Dadurch ergibt sich, ohne zusätzliche konstruktive Maßnahmen vorsehen zu müssen, eine verbesserte aerodynamische Güte des Laufschaufelgitters.

Dabei ist der Radialabstand der Radialvertiefung zu der Einhüllenden der Schaufelspitzen entlang der Hauptströmungsrichtung der Axialturbomaschine konstant.

Ferner ist es bevorzugt, dass der erste Krümmungsabschnitt in demjenigen Bereich der Ringrauminneseite angesiedelt ist, welcher dem Bereich einer vorderen Hälfte der Profilsehne der Schaufelblattspitze von der Vorderkante aus gesehen gegenüberliegt. Außerdem ist es bevorzugt, dass das Maximum der ersten Radialvertiefung in demjenigen Bereich bzw. in demjenigen Punkt angesiedelt ist, welcher bei 10% bis 30%, bevorzugt bei 20%, der Profilsehne von der Vorderkante aus gesehen gegenüberliegt.

Somit ist vorteilhaft die Radialerhebung und die Radialvertiefung im Bereich der höchsten Druckbelastung der Schaufelspitze der herkömmlich profilierten Laufschaufel angesiedelt, so dass die Leckageströmung durch den Radialspalt reduziert ist.

Es ist bevorzugt, dass in Hauptströmungsrichtung der Axialturbomaschine und von der Vorderkante aus gesehen der erste Wendepunkt bei 5 % bis 15 %, bevorzugt bei 10 %, der Sehnenlänge der Schaufel und/oder der Grund der Radialvertiefung bei 15 % bis 25 %, bevorzugt bei 20 %, der Sehnenlänge der Laufschaufel angesiedelt ist.

Prinzipiell sind die Kontur der Schaufelblattspitze und die der ihr gegenüberliegenden Ringrauminnenseite stets korrespondierend, so dass beide Konturen identisch zu beschreiben sind. Somit gelten die für eine Axialturbomaschine auftretenden Vorteile sinngemäß auch für eine Laufschaufel.

Bevorzugt ist die Axialturbomaschine ein Verdichter in einer stationären Gasturbine, in einem Flugtriebwerk, in einem Prozessverdichter, in einem Ventilator, in einem Gebläse, in einer Dampfdruckturbine, in einer hydraulischen Turbine und/oder einer Pumpe.

Im Folgenden wird die Erfindung anhand der beigefügten schematischen Zeichnungen erläutert. Es zeigen:
Fig. 1 eine perspektivische Ansicht einer Laufschaufelspitze und
Fig. 2 eine Seitenansicht eines Gehäuses des bevorzugten Axialverdichters.

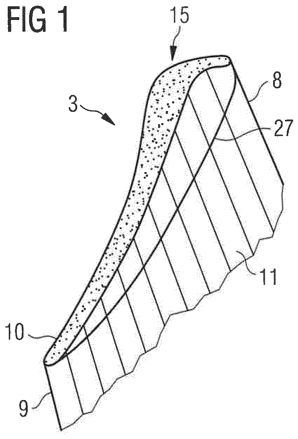

Fig. 1 zeigt eine Laufschaufel 3 eines Laufschaufelgitters eines Rotors eines (nicht dargestellten) Axialverdichters. Sie weist an ihrem stromauf gewandten Ende eine Vorderkante 8 und an ihrem stromab gewandten Ende eine Hinterkante 9 auf, wobei die eine Seite zwischen der Vorderkante 8 und der Hinterkante 9 die Druckseite 10 und die andere Seite zwischen der Vorderkante 8 und der Hinterkante 9 die Saugseite 11 der Laufschaufel 3 ist. Von der Vorderkante 8 zur Hinterkante 9 erstreckt sich eine geradlinige Profilsehne mit einer normierten Sehnenlänge von 100%, wobei der Anfangspunkt gleich 0% der Sehnenlänge der Profilsehne an der Vorderkante angesiedelt ist und der Endpunkt gleich 100 % der Sehnenlänge der Profilsehne an der Hinterkante.

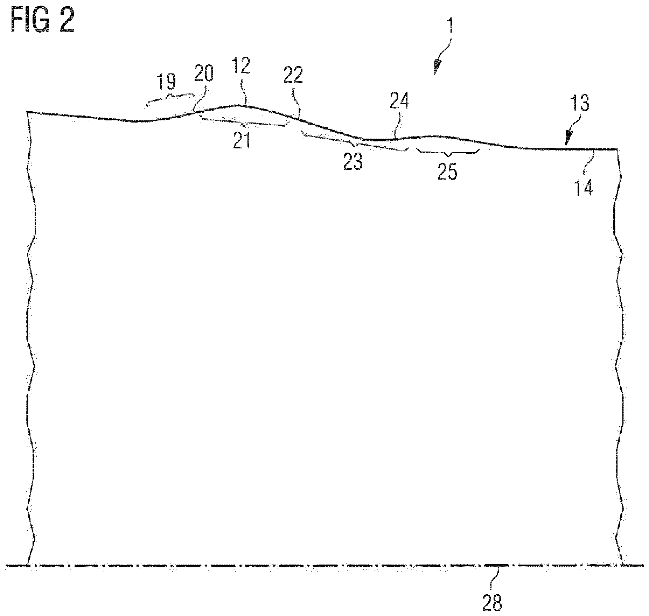

Die Laufschaufel 3 ist radial außenseitig von einer Ringraumwandung 13 (Fig. 2) umgeben, wobei die Ringraumwandung 13 eine Ringrauminnenseite 14 aufweist, die der Laufschaufel 3 zugewandt ist. Die Laufschaufel 3 ist an ihrem radial innen liegenden Längsende befestigt und mit ihrem radial außen liegenden Längsende freistehend, wobei an dem freistehenden Ende eine Schaufelspitze 15 ausgebildet ist. Zwischen der Ringrauminnenseite 14 und der Schaufelspitze 15 ist ein Spalt vorgesehen.

Die Schaufelspitze 15 ist an ihrer der Ringrauminnenseite 14 zugewandten Seite mit einer Radialerhebung versehen, deren maximale Radialerstreckung bei 20 % der Sehnenlänge der Profilsehne der Schaufel 3 angesiedelt ist. Dem Verlauf der Schaufelspitze 15 folgend ist in einem Abschnitt der Ringrauminnenseite 14, welcher der Schaufelspitze 15 gegenüberliegt, in der Ringraumwandung 13 an der Ringrauminnenseite 14 eine Radialvertiefung vorgesehen, die in Fig. 2 gesehen von links nach rechts parallel zu der Radialerhebung verläuft. Die Radialvertiefung weist einen Grund 12 auf, der radial außerhalb auf der Höhe der maximalen Radialerstreckung der Radialerhebung angeordnet ist.

Die Radialvertiefung ist in der Ringraumwandung 13 umlaufend ausgebildet. Dadurch kann, wenn der Rotor um die Drehachse 28 sich dreht, jede Laufschaufel 3 mit ihrer Radialerhebung in die Radialvertiefung eingreifend rotieren.

In Hauptströmungsrichtung des Axialverdichters gesehen sind zwei Radialvertiefungen und analog dazu zwei Radialerhebungen erfindungsgemäß von vier Krümmungsabschnitten 19, 21, 23, 25 gebildet, wobei die Krümmungsabschnitte 19, 21, 23, 25 jeweils eine Krümmung haben, wobei das Vorzeichen der Krümmungen von Krümmungsabschnitt zu Krümmungsabschnitt wechselt. Die Krümmungsabschnitte 19, 21, 23, 25 sind hintereinander liegend angeordnet, wobei der erste Krümmungsabschnitt 19 von dem zweiten Krümmungsabschnitt 21 durch einen ersten Wendepunkt 20 abgegrenzt ist. Ferner ist der zweite Krümmungsabschnitt 22 von dem dritten Krümmungsabschnitt 23 durch einen zweiten Wendepunkt 22 abgetrennt. Der dritte Krümmungsabschnitt 23 ist von dem vierten Krümmungsabschnitt 25 durch einen dritten Wendepunkt 24 abgegrenzt. Durch die hintereinander liegende Anordnung der Krümmungsabschnitte 19, 21, 23, 25 und der dazwischen liegenden Wendepunkte 20, 22, 24 ist der Spalt zwischen der Schaufelspitze 15 und der Ringrauminnenseite 14 wellenartig ausgebildet.

In Fig. 1 ist mit der Linie 27 die Radialabgrenzung einer herkömmlichen Schaufelspitze dargestellt, so dass der radiale Überstand hervorgerufen durch das Vorsehen der Radialerhebung deutlich wird.

In Fig. 2 ist der Verlauf der Ringrauminnenseite 14 in Relation zu einer Drehachse 28 des Axialverdichters 1 gezeigt.

Selbstverständlich ist es möglich, dass der Verlauf der Ringrauminnenseite 14 und dementsprechend die Schaufelblattspitze 15 nicht nur vier Krümmungsabschnitte aufweist, sondern noch mehr Krümmungsabschnitte.

## Patentansprüche

1. Axialturbomaschine (1) mit einem Laufschaufelgitter, das von Laufschaufeln (3) mit jeweils einer Vorderkante (8) und einer radial außen liegenden, freistehenden Schaufelspitze (15) gebildet ist, und einer das Laufschaufelgitter ummantelnden Ringraumwandung (13) mit einer Ringrauminnenseite (14), mit der die Ringraumwandung (13) unmittelbar benachbart zu den Schaufelspitzen (15) unter Ausbildung eines Radialspalts zwischen der Einhüllenden der Schaufelspitzen (15) und der Ringrauminnenseite (14) angeordnet ist, wobei das Spaltmaß des Radialspalts konstant ist und der Radialspalt entlang der Hauptdurchströmungsrichtung der Axialturbomaschine (1) einen gleichmäßigen und wellenartigen, sich nicht abrupt ändernden Verlauf aufweist, wobei jede Laufschaufel (3) an ihrer Schaufelspitze (15) eine erstes Radialerhebung mit einem ersten Krümmungsabschnitt (19) und einem zweiten Krümmungsabschnitt (12) aufweist, wobei innerhalb eines der Schaufelspitze (15) gegenüberliegenden axialen Abschnitts der Ringrauminnenseite (14) die Ringraumwandung (13) an der Ringrauminnenseite (14) eine umlaufende erste Radialvertiefung mit einem ersten und einem zweiten Krümmungsabschnitt (19, 21) aufweist, die im entlang der Hauptdurchströmungsrichtung der Axialturbomaschine (1) konstanten Radialabstand zu der Einhüllenden der zur Ringrauminnenseite (14) korrespondierenden Schaufelspitzen (15) angeordnet ist,
**dadurch gekennzeichnet, dass**
die nach Art einer Doppelwelle ausgebildeten Verläufe der Ringrauminnenseite (14), der Schaufelblattspitze (15) und des Radialspalts jeweils zumindest vier durch Wendepunkte abgegrenzte Krümmungsabschnitte aufweisen, wobei die Schaufelspitze (15) entlang einer Profilsehne der Laufschaufel (3) und die Ringraumwandung (13) entlang der Hauptdurchströmungsrichtung der Axialturbomaschine (1) jeweils mindestens
• einen sich an den zweiten Krümmungsabschnitt (21) anschließenden dritten Krümmungsabschnitt (23) und
• einen sich an den dritten Krümmungsabschnitt (23) anschließenden vierten Krümmungsabschnitt (25) aufweist,
wobei
• der erste Krümmungsabschnitt (19) von dem zweiten Krümmungsabschnitt (21) mit einem ersten Wendepunkt (20),
• der zweite Krümmungsabschnitt (21) von dem dritten Krümmungsabschnitt (23) mit einem zweiten Wendepunkt (22) und
• der dritte Krümmungsabschnitt (23) von dem vierten Krümmungsabschnitt (25) mit einem dritten Wendepunkt (24) abgegrenzt ist,
wobei die Krümmungen benachbarter Krümmungsabschnitte (19, 21, 23, 25) unterschiedliche Vorzeichen haben, wobei die Krümmungsabschnitte (19, 21, 23, 25) derart geformt sind, dass entlang der Hauptdurchströmungsrichtung der Axialturbomaschine (1) der Verlauf des Radialspalts im Wesentlichen kantenfrei und stufenfrei verläuft.

2. Axialturbomaschine (1) gemäß Anspruch 1, wobei der erste Krümmungsabschnitt (19) in demjenigen Bereich der Ringrauminnenseite (14) angesiedelt ist, welcher dem Bereich einer vorderen Hälfte der Profilsehne der Schaufelblattspitze (15) von der Vorderkante (8) aus gesehen gegenüberliegt.

3. Axialturbomaschine (1) gemäß einem der Ansprüche 1 oder 2, wobei das Maximum der ersten Radialvertiefung in demjenigen Bereich bzw. in demjenigen Punkt angesiedelt ist, welcher bei 10 % bis 30 %, insbesondere bei 20 %, der Profilsehne von der Vorderkante (8) aus gesehen gegenüberliegt.

## Claims

1. Axial turbomachine (1) having a rotor blade cascade which is formed by rotor blades (3) in each case with a front edge (8) and a freestanding blade tip (15) which lies radially on the outside, and an annular chamber wall (13) which encases the rotor blade cascade and has an annular chamber inner side (14), by way of which the annular chamber wall (13) is arranged directly adjacently with respect to the blade tips (15) with the configuration of a radial gap between the envelope of the blade tips (15) and the annular chamber inner side (14), the gap size of the radial gap being constant, and the radial gap having a homogeneous and undulating course which does not change abruptly along the main throughflow direction of the axial turbomachine (1), each rotor blade (3) having, at its blade tip (15), a first radial elevation with a first curvature section (19) and a second curvature section (12), the annular chamber wall (13) having, on the annular chamber inner side (14), a circumferential first radial depression with a first and a second curvature section (19, 21) within an axial section of the annular chamber inner side (14), which axial section lies opposite the blade tip (15), which circumferential first radial depression is arranged at a constant radial spacing along the main throughflow direction of the axial turbomachine (1) from the envelope of the blade tips (15) which correspond to the annular chamber inner side (14), **characterized in that** the courses of the annular chamber inner side (14), the rotor blade tip (15) and the radial gap, which courses are configured in the manner of a double wave, have in each case at least four curvature sections which are delimited by way of inflection points, the blade tip (15) having, along a profile chord of the rotor blade (3), and the annular chamber wall (13) having, along the main throughflow direction of the axial turbomachine (1), in each case at least
• one third curvature section (23) which adjoins the second curvature section (21), and
• one fourth curvature section (25) which adjoins the third curvature section (23),
• the first curvature section (19) being delimited from the second curvature section (21) by way of a first inflection point (20),
• the second curvature section (21) being delimited from the third curvature section (23) by way of a second inflection point (22), and
• the third curvature section (23) being delimited from the fourth curvature section (25) by way of a third inflection point (24),
the curvatures of adjacent curvature sections (19, 21, 23, 25) having different algebraic signs, the curvature sections (19, 21, 23, 25) being formed in such a way that the course of the radial gap runs substantially free of edges and steps along the main throughflow direction of the axial turbomachine (1).

2. Axial turbomachine (1) according to Claim 1, the first curvature section (19) being established in that region of the annular chamber inner side (14) which lies opposite the region of a front half of the profile chord of the rotor blade tip (15) as viewed from the front edge (8).

3. Axial turbomachine (1) according to either of Claims 1 and 2, the maximum of the first radial depression being established in that region or at that point which lies opposite the profile chord at from 10% to 30%, in particular at 20%, as viewed from the front edge (8).

## Revendications

1. Turbomachine (1) axiale, comprenant une grille d'aubes mobiles, qui est formée d'aubes (3) mobiles, ayant chacune un bord (8) avant et une pointe (15) d'aube libre se trouvant vers l'extérieur radialement, et une paroi (13) d'espace annulaire enveloppant la grille d'aubes mobiles et ayant une face (14) intérieure d'espace annulaire par lequel la paroi (13) d'espace annulaire est directement voisine des pointes (15) d'aube avec constitution d'un interstice radial entre les enveloppes des pointes (15) d'aube et la face (4) intérieure de l'espace annulaire, la dimension de l'interstice radial étant constante et l'interstice radial ayant, suivant la direction de passage principale de la turbomachine (1) axiale, un tracé uniforme et de type ondulé ne se modifiant pas de manière abrupte, chaque aube (3) mobile ayant, sur sa pointe (15), une première saillie radiale ayant une première partie (19) de courbure et une deuxième partie (12) de courbure, dans laquelle, à l'intérieur d'une partie axiale, opposée à la pointe (15) de l'aube, de la face (14) intérieure de l'espace annulaire, la paroi (13) de l'espace annulaire a, sur la face (14) intérieure de l'espace annulaire, une première cavité radiale faisant le tour et ayant une première et une deuxième parties (19, 21) de courbure, qui, suivant la direction de passage principal de la turbomachine (1) axiale, est disposée à une distance radiale constante des enveloppes des pointes (15) d'aube correspondant à la face (14) intérieure de l'espace annulaire,
**caractérisée en ce que**
les tracés, constitués à la manière d'une ondulation double, de la face (14) intérieure de l'espace annulaire, des pointes (15) de pale d'aube et de l'interstice radial ont chacun au moins quatre parties de courbure délimitées par des points d'inflexion, les pointes (15) d'aube ayant, le long d'une corde de profil de l'aube (3) mobile et la paroi (13) de l'espace annulaire le long de la direction de passage principal de la turbomachine ( ) axiale, respectivement, au moins
• une troisième partie (23) de courbure se raccordant à la deuxième partie (21) de courbure et
• une quatrième partie (25) de courbure se raccordant à la troisième partie (23) de courbure,
dans laquelle
• la première partie (19) de courbure est délimitée par la deuxième partie (21) de courbure ayant un premier point (20) d'inflexion,
• la deuxième partie (21) de courbure est délimitée par la troisième partie (23) de courbure ayant un deuxième point (22) d'inflexion et
• la troisième partie (23) de courbure est délimitée par la quatrième partie (25) de courbure ayant un troisième point (24) d'inflexion,
dans laquelle les courbures de parties (19, 21, 23, 25) de courbure voisines ont des signes différents, les parties (19, 21, 23, 25) de courbure étant conformées de manière à ce que, suivant la direction de passage principale de la turbomachine (1) axiale, le tracé de l'interstice radial s'étende sensiblement sans bord et sans gradin.

2. Turbomachine (1) axiale suivant la revendication 1, dans laquelle la première partie (19) de courbure est implantée dans la région de la face (14) intérieure de l'espace annulaire, qui est opposée, considéré à partir du bord (8) avant, à la région d'une moitié plus en avant de la corde de profil de la pointe (15) de pale d'aube.

3. Turbomachine (1) axiale suivant l'une des revendications 1 ou 2, dans laquelle le maximum de la première cavité radiale est implanté dans la région ou au point, qui est opposée, considéré à partir du bord (8) avant, à 10% à 30%, notamment à 20% de la corde du profil.
